# EUROPÄISCHE PATENTSCHRIFT

(11) **EP 2 021 634 B1**
(45) Veröffentlichungstag und Bekanntmachung des Hinweises auf die Patenterteilung: **26.12.2012**
(21) Anmeldenummer: 07728996.5
(22) Anmeldetag: 10.05.2007
(51) Int. Cl.: F01K 25/08, F01K 19/08, F03G 6/06, F01K 25/06, F04F 5/54

(54) **ANLAGE UND ASSOZIIERTES VERFAHREN ZUR UMWANDLUNG VON WÄRMEENERGIE IN MECHANISCHE, ELEKTRISCHE UND/ODER THERMISCHE ENERGIE**
DEVICE AND ASSOCIATED METHOD FOR THE CONVERSION OF HEAT ENERGY INTO MECHANICAL, ELECTRICAL AND/OR THERMAL ENERGY
INSTALLATION ET PROCÉDÉ ASSOCIÉ POUR LA CONVERSION DE LA CHALEUR EN ÉNERGIE MÉCANIQUE, ÉLECTRIQUE ET/OU ÉNERGIE THERMIQUE

(30) Priorität: 16.05.2006 DE 102006022792
(43) Veröffentlichungstag der Anmeldung: 11.02.2009
(73) Patentinhaber: Ecoenergy Patent GmbH, 64293 Darmstadt (DE)
(72) Erfinder: OSER, Erwin, 50767 Köln (DE); HAMM, Hubert, 45659 Recklinghausen (DE); RANNOW, Michael, 57368 Lennestadt (DE)
(74) Vertreter: Gröschel, Andreas
(86) Internationale Anmeldenummer: PCT/EP2007/054544
(87) Internationale Veröffentlichungsnummer: WO 2007/131943

(56) Entgegenhaltungen:
- WO-A-93/01397
- WO-A-2005/061858
- FR-A- 981 410
- US-A- 4 089 177

## Beschreibung

Die Erfindung betrifft ein Verfahren und eine Anlage zur Umwandlung von Wärmeenergie, in mechanische Energie durch Entspannung eines dampfförmigen Arbeitsmittels in einer mit einem ersten Verdampfer verbundenen Entspannungsvorrichtung. Die Erfindung sieht dabei die Möglichkeit vor, dass praktisch sämtliche oder sämtliche Energie, nachfolgend auch als Hilfsenergien bezeichnet, für die Herstellung und Förderung von auftretenden Dämpfen und Gasen vollständig aus der mittels des erfindungsgemäßen Verfahrens erzeugten Bewegungsenergie, des beispielsweise in dem Verdampfer gebildeten dampfförmigen Arbeitsmittels und/oder des beispielsweise in einem Kollektor als zweitem unabhängigem Verdampfungsaggregates gebildeten Treibmittels bereitgestellt werden, so dass in dieser Ausführungsform keine oder praktisch keine zusätzlichen mechanischen oder elektrischen Hilfsenergien zur Durchführung des erfindungsgemäßen Verfahrens erforderlich werden.

Die Erfindung ist zudem geeignet, bei der Umwandlung von auf unterschiedlichen Temperaturniveaus anfallenden Wärmemengen energieeffiziente Ausführungsalternativen zu realisieren.

Für die Umwandlung von Wärmeenergie in mechanische Energie sind nach dem Stand der Technik unterschiedliche Verfahren und Vorrichtungen bekannt. Dampfkraftwerke arbeiten bei einem Druck von 200 bis über 400 bar mit einer Entspannung bis auf ca. 40 mbar, d.h. solche Anlagen arbeiten zur Energiegewinnung mit einem Druckverhältnis im Bereich von 500 bis 1.000. Bei diesen Verfahren wird im Wesentlichen die mechanische Energie aus der Entspannung eines mit der Wärme mittels Verdampfung erzeugten dampfförmigen Arbeitsmittels mit Hilfe von Generatoren weiter in elektrische Energie umgewandelt. Für eine gute Energieeffizienz, also einen hohen Umwandlungswirkungsgrad von Wärme in mechanische Energie, ist für die Entspannung bei im Stand der Technik bekanten Anlagen und Verfahren ein großes Druckverhältnis vorzusehen. Deshalb werden herkömmliche Anlagen mit großen Ausgangsdrücken, die durch Verdampfung eines Treibgases bei hohen Temperaturen, d.h. Wasserdampf von mindestens 500° C bis 600° C, eingestellt werden, betrieben. Als Entspannungsaggregate werden dabei üblicherweise Turbinen eingesetzt. Nach der Entspannung wird der Treibmittel kondensiert, wobei die anfallende Kondensationswärme als Verlustwärme abgeführt werden muss.

Ein weiteres bekanntes Verfahren ist der ORC-Prozess. Beim ORC-Prozess wird das Arbeitsmittel ebenfalls erwärmt und verdampft. Anschließend wird es über einer Dampfturbine entspannt, um dem Prozess mechanische Energie zu entziehen. Nach der Turbine wird der Dampf über einen Rekuperator geführt, um Restenergie der Dampfphase dem flüssigen Arbeitsmittel zuzuführen. Anschließend wird das noch dampfförmige Arbeitsmittel kondensiert und dem Prozess über die Speisepumpe erneut zugeführt. üblicherweise werden zum Betrieb solcher Anlagen Temperaturniveaus des Arbeitsdampfs von 150° C bis 300° C verwendet.

US 4,089,177 beschreibt eine Wärmekraftmaschine zur Umwandelung von Wärmeenergie in mechanische Energie, umfassend einer Turbine, einem Kühler und einer Heizvorrichtung. Ein Medium zirkuliert in zwei Kreisläufen: einen dampfförmigen und einen flüssigen Kreislauf. Diese beiden Kreisläufe werden durch eine Strahlpumpe zusammengeführt und durch eine Abscheidevorrichtung wieder separiert.

Im Sonderfall der heute im Hinblick auf eine Nutzung erneuerbarer Energien besonders interessanten Umwandlung der solaren Wärmeenergie in mechanische oder elektrische Energie, die sog. solarthermische Stromgewinnung durch eine Entspannung dampfförmiger Arbeitsmittel, werden bevorzugt drei unterschiedliche Auslegungsalternativen verfolgt. Bei der ersten Alternative wird die Sonnenstrahlung mit Außenspiegeln auf einen zentral angeordneten Verdampfer konzentriert, mit dem ein Arbeitsmittel verdampft wird, das anschließend in einer Turbine entspannt wird. Bei der zweiten Alternative erfolgt die Konzentration der Sonnen strahlung bereits in der Auffangvorrichtung, beispielsweise Parabolrinnenkollektoren, bei denen ein Absorbetrohr in der Brennachse eines linearen Parabolspiegels verläuft. Der dort erzeugte Dampf wird anschließend zusammengeführt und in einer zentralen Entspannungsturbine entspannt. Dieser thermische Entspannungsprozess in einer Entspannungsturbine entspricht im Wesentlichen den thermischen Entspannungsprozessen in Kraftwerken.

Als dritte, neuere Alternative werden inzwischen sog. Dish-Stirling-Systeme verwendet, bei denen die Solarstrahlung in einem Parabolspiegel auf den Verdampferraum eines Stirling-Motors konzentriert wird, wodurch der Stirling-Motor angetrieben wird.

Nachteil der bisher beschriebenen Systeme ist die entsprechend den Carnot-Bedingungen für einen guten Wirkungsgrad erforderliche hohe Ausgangstemperatur, d.h. bei Wasserdampf derzeit ≥ 600° C und beim ORC-Verfahren ≥ 200° C, zur Entspannung des Dampfes. Dies ist der Grund für die Konzentration der Sonnenstrahlung mit Spiegelsystemen, da nur so die geforderten hohen Temperaturen überhaupt erreicht werden können. Ein Nachteil ist dabei, dass diese Forderungen nur bei direkter Sonneneinstrahlung, also nicht bei diffuser Sonnenstrahlung, wie es bei bedecktem Himmel gegeben ist, erfüllt werden kann. Dies hat nachteilige Konsequenzen für die Verfügbarkeit einer so aufgebauten Anlage.

Ein besonderer Nachteil ist dies in solchen Regionen, in denen die Zahl der Jahresstunden mit direkter Sonneneinstrahlung vergleichsweise niedrig ist, wie etwa in Nord- und Mitteleuropa. Dadurch ist es keine Überraschung, dass die Erzeugung von elektrischer Energie aus solarthermischen Anlagen bisher nur in sonnenreichen Regionen vorgesehen wird, wie etwa Südeuropa, die sonnenreichen Staaten der USA oder sonstige äquatornahe Regionen.

Die Erfindung hat sich nun zum Ziel gesetzt, wenigstens einen der vorgenannten Nachteile des Standes der Technik zu überwinden.

Die Lösung der Aufgabe erfolgt erfindungsgemäß durch die Merkmale des Anspruchs 1. Vorteilhafte Ausgestaltungen der Erfindung sind in den Unteransprüchen angegeben.

Insbesondere betrifft der Gegenstand der vorliegenden Erfindung ein Verfahren zur Umwandlung von Wärmeenergie in mechanische, elektrische und/oder thermische Energie, wobei das Verfahren wenigstens zwei miteinander verbundene Kreisläufe umfasst, wobei das Verfahren wenigstens zwei Kreisläufe, die durch wenigstens einen gemeinsamen Teilabschnitt verbunden sind, umfasst, wobei der erste Kreislauf wenigstens eine Entspannungsvorrichtung aufweist und der gemeinsame Teilabschnitt mit dem ersten und zweiten Kreislauf über wenigstens einen Strahlverdichter verbunden ist, wobei in dem ersten Kreislauf ein Arbeitsmittel und in dem zweiten Kreislauf ein Treibmittel und in dem gemeinsamen Teilabschnitt ein Gemisch aus Arbeitsmittel und Treibmittel geführt werden, wobei das im Strahlverdichter gebildete Gemisch nachfolgend in einer Trennvorrichtung in Arbeitsmittelstrom und Treibmittelstrom getrennt wird, wobei das Arbeitsmittel in den ersten Kreislauf rückgeführt und einer Verdampfereinheit zugeführt wird, wobei das verdampfte Arbeitsmittel der Entspannungsvorrichtung und nachfolgend dem Strahlverdichter zugeleitet wird und abgetrenntes Treibmittel in den zweiten Kreislauf rückgeführt wird und zwecks Wärmeenergieaufnahme einem Kollektor zugeleitet und nach der Wärmeenergieaufnahme dem Strahlverdichter zugeführt wird. Wenigstens ein Teilstrom des Treibmittels wird nach dem Kollektor abgezweigt durch den Arbeitsmittel-Verdampfer geleitet und/oder an dem Arbeitsmittel-Verdampfer vorbeigeleitet, zwecks Wärmeübertragung an das Arbeitsmittel im Verdampfer. Anschließend wird das Treibmittel in den Kollektor rückgeführt. Ferner wird wenigstens ein Teilstrom nach dem Kollektor abgezweigt und wenigstens einer Entspannungsvorrichtung zugeführt. Das entspannte Treibmittel des abgezweigten Teilstroms wird dann durch den Arbeitsmittel-Verdampfer geführt und/oder an dem Arbeitsmittel-Verdampfer vorbeigeführt, zwecks Wärmeübertragung an das Arbeitsmittel im Verdampfer. Anschließend wird das Treibmittel in den Kollektor rückgeführt. In der Teilstromführung des zweiten Kreislaufes ist zusätzlich wenigstens eine Entspannungseinrichtung, beispielsweise Turbine, angeordnet, die als Antrieb einer Pumpe genutzt wird.

Das Arbeitsmittel und das Treibmittel können gleich oder unterschiedlich sein.

Bevorzugt ist, dass das Arbeitsmittel und das Treibmittel aus dem gleichen Stoff/Stoffgemisch gebildet sind, so dass das Gemisch homogen ist.

Bevorzugt ist, dass das Arbeitsmittel und Treibmittel aus zwei unterschiedlichen Stoffen/Stoffgemischen, bevorzugt nicht-mischbare Flüssigkeiten, gebildet sind.

Das Merkmal Dampf im Sinne dieser Erfindung umfasst auch gasförmige Stoffe sowie auch Gase enthalten einen Flüssigkeitsanteil, wie Nebel und dergleichen.

Die Formulierung das Treibmittel zur Wärmeübertragung "an und/oder durch den Verdampfer" geleitet bzw. geführt wird bedeutet, dass das Treibmittel durch eine Einrichtung, beispielsweise ein Rohr geleitet wird, so dass es nicht zu einer Vermischung mit Arbeitsmittel oder Austritt des Treibmittels in das Arbeitsmittel kommt.

Ein Vorteil des erfindungsgemäßen Verfahrens ist beispielsweise die Möglichkeit, die Umwandlung der Solarwärme in mechanische Energie auch bei bedecktem Himmel zu realisieren. Dies bedeutet, dass zum Auffangen der Solarstrahlung einfachere Kollektoren bzw. Kollektorsysteme verwendbar werden, beispielsweise Plattenkondensatoren, bei denen die Sonneneinstrahlung flächig aufgenommen wird. Die damit erreichbaren Temperaturen, die auf ein durchströmendes Treibmittel, auch nachfolgend als Wärmeträgerfluid bezeichnet, übertragen werden, sind dabei auf Temperaturen im Bereich um etwa ≤ 100° C beschränkt, abhängig von der aktuellen Wärmeübertragung [Q.] der externen Energiequelle.

Eine energieeffiziente Umwandlung von Wärme auf diesem "Niedertemperaturniveau", d.h. Temperaturen von beispielsweise 30° C bis zu 100° C, ist nicht nur bei der Solarthermie, sondern auch bei der Nutzung anderer erneuerbarer Energien, beispielsweise bei der Geothermie oder bei den Abwärmen der mit Bioenergie angetriebenen Verbrennungsmotoren von BHKW technisch relevant. Darüber hinaus ist dieser Temperaturbereich generell im Hinblick auf die Abwärmen aus thermischen Industrieprozessen von großer Bedeutung.

In der WO2005061858 (WO2004EP53654) wird ein Verfahren angegeben, bei dem die Entspannung in einem Niederdruck-Entspannungsaggregat, vorzugsweise in Form eines Wälzkolbengebläses, auch Roots-Gebläse genannt, erfolgt, auf die in vollem Umfang Bezug genommen wird.

Bei einem Wälzkolbengebläse, auch Rootsgebläse oder Drehkolbengebläse genannt, handelt es sich um ein Gebläse, die ohne innere Verdichtung arbeiten, d.h. die Zahnrad- und Flügelzellenpumpen ähneln. Beispielsweise, zwei- oder auch dreiflügelige Rotoren transportieren in den Lücken zwischen den Flügeln und der Außenwand ein Gas (meistens Luft) von der Saug- zur Druckseite, die dann von der Rückströmung des verdichteten Gases verdichtet wird.

Die Rotation der Wälz- oder Drehkolben schließt die Luft auf der Ansaugseite zwischen Rotor und Gehäuse ein und fördert sie ohne innere Verdichtung zur Druckseite. Die Förderkammer wird allein durch den minimalen Spalt zwischen Rotor und Gehäuse ölfrei abgedichtet.

Wälzkolbengebläse werden beispielsweise von folgenden bekannten Herstellern angeboten:
- Kaeser Kompressoren GmbH,
- Aerzener Maschinenfabrik GmbH,
- RKR Verdichtertechnik GmbH.

Das erfindungsgemäße Verfahren kann eine Entspannungsvorrichtung in Form einer Niederruckentspannungsvorrichtung aufweisen, vorzugsweise wenigstens ein Wälzkolbengebläse, eine Ovalradpumpe und/oder ein Schraubenexpander, bevorzugt mit gasdichtem Schöpfraum ist, wobei ein Wälzkolbengebläse am meisten bevorzugt ist.

Niederdruckentspannung im Sinne dieser Erfindung bedeutet dass ein Arbeitsmittel und/oder Treibmittel von einem höheren Druck im Bereich von beispielsweise ≥1,2 bar bis 10 bar, vorzugsweise 2,5 bar bis 8 bar und bevorzugt 3 bar bis 6 bar auf einen niedrigeren Druck entspannt wird.

Hochdruckentspannung im Sinne dieser Erfindung bedeutet dass ein Arbeitsmittel und/oder Treibmittel von einem höheren Druck im Bereich von beispielsweise > 10 bar bis ≤ 20 bar, vorzugsweise 12 bar bis 18 bar und bevorzugt 14 bar bis 16 bar auf einen niedrigeren Druck entspannt wird.

Erfindungsgemäß kann vorgesehen sein, dass wenigstens eine Entspannungsvorrichtung zur Umwandlung von Wärmeenergie in mechanische und/oder elektrische Energie mit wenigstens einem Generator verbunden ist.

Das Arbeitsmittel kann in einer Verdampfereinheit verdampft und in einer der Verdampfereinheit nachgeschalteten Entspannungsvorrichtung entspannt werden.

Die Temperatur und der Druck des Arbeitsmittels das dem Strahlverdichter zugeführt wird ist vorzugsweise niedriger als die Temperatur und der Druck des Treibmittels das dem Strahlverdichter zugeführt.

Das erfindungsgemäße Verfahren kann bevorzugt eingesetzt werden, wenn die Temperatur der externen Wärmequelle ≤ 500° C, vorzugsweises 0° C bis ≤ 250° C, bevorzugt ≥ 30° C bis ≤ 150° C, weiter bevorzugt ≥ 50° C bis ≤ 120° C und besonders bevorzugt ≥ 70° C bis ≤ 90° C, ausmacht.

Es kann zur Erhöhung des Wirkungsgrades des erfindungsgemäßen Verfahrens und der erfindungsgemäßen Anlage vorteilhaft sein, wenn der Druck des Arbeitsmittels in der Verdampfereinheit und/oder vor der Entspannungsvorrichtung ≥ 1,5 bar und ≤ 10 bar, vorzugsweise ≥ 2 bar und ≤ 5 bar und bevorzugt ≥ 3 bar und ≤ 4 bar, ausmacht.

Der Druck des Gemisches aus Arbeitsmittel und Treibmittel kann beispielsweise unmittelbar nach Verlassen des Strahlverdichters um wenigstens 0,3 bar, vorzugsweise 0,5 bar bis 6 bar, bevorzugt 0,7 bar bis 5 bar und besonders bevorzugt 1 bar bis 3 bar über dem Druck des Arbeitsmittels zwischen Verdampfereinheit und Entspannungsvorrichtung liegen.

Das erfindungsgemäße Verfahren sieht vor, dass mit dem über einen geeigneten Kollektor und/oder eine Wärmequelle bereitgestellten Temperaturniveau Treibmittel verdampft wird und dem Strahlverdichter zugeführt wird.

Es kann bevorzugt sein, dass das Treibmittel im Kollektor eine Wärmeenergieaufnahme erfährt, so dass das Treibmittel, vorzugsweise als Dampf, einen Druck von mehr als 2 bar, bevorzugt mehr als 4 bar, noch bevorzugter mehr als 5 bar und maximal 10 bar vor Eintritt in den Strahlverdichter aufweist.

Es kann ferner bevorzugt sein, dass das Arbeitsmittel eine niedrige molare Verdampfungsenthalpie als das Treibmittel aufweist, um so ein großes Dampfvolumen zu erzeugen.

Niedrige molare Verdampfungsenthalpien können beispielsweise ≤ 30 kJ/Mol, bevorzugt ≤ 25 kJ/Mol, noch mehr bevorzugt ≥ 15 kJ/Mol und ≤ 20 kJ/Mol ausmachen.

In den Strahlverdichter kann das Treibmittel als Dampf und/oder Flüssigkeit eingeführt werden. Vorteilhaft ist es, wenn die Flüssigkeit unter den gegebenen Druckverhältnissen in der Nähe oder am Siedepunkt befindet.

In der Nähe zum Siedepunkt kann beispielsweise eine Temperatur sein, die maximal > 0° C bis ≤ 15° C, bevorzugt ≥ 1° C bis ≤ 10 ° C und besonders bevorzugt ≥ 2° C bis ≤ 8 ° C unterhalb des Siedepunktes des verwendeten Treibmittels bei dem jeweils gegeben Druck, der in der Zuleitung zum Strahlverdichter herrscht, liegt.

Der in der Verdampfereinheit erzeugte Arbeitsmitteldampf kann eine Temperatur im Bereich von ≥ 30° C und ≤ 120° C, vorzugsweise von 35° C und ≤ 100° C und bevorzugt von ≥ 40° C und ≤ 90° C aufweisen.

Der Arbeitsmitteldampf nach der Entspannung und vor dem Strahlverdichter kann insbesondere Drücke im Bereich von ≥ 0,5 bar und ≤ 3 bar, vorzugsweise von ≥ 0,7 bar und ≤ 2 bar und bevorzugt von ≥ 1 bar und ≤ 1,5 bar, aufweisen.

Als Arbeitsmittel und/oder Treibmittel können erfindungsgemäß kurzkettige organische Lösemittel aus der Klasse der ein- oder mehrwertigen Alkohole, Aldehyde, Ketone oder Ester, Kältemittel, kurzkettige Kohlenwasserstoffe mit Nebengruppen oder Silikone vor.

Im folgenden werden beispielhafte Ausführungen des erfindungsgemäßen Verfahrens auf der Grundlage von in einem Kollektor bzw. Wärmekollektor aus Treibmittel erzeugten Treibmittel beschrieben. Es kann aber auch Treibmittel in durchgehend flüssiger Form verwendet werden, d.h. es kann erfindungsgemäß vorteilhaft sein, wenn man das Treibmittel nicht verdampft. Üblicherweise ist die spezifische Wärmekapazität von Flüssigkeiten besser als von Gasen. Da das Treibmittel dazu benutzt wird Wärmeenergie auf das Arbeitsmittel zu übertragen kann die ausschließliche Verwendung eines lediglich flüssigen Treibmittels für den gesamten Verfahrensprozess vorteilhaft sein.

Die vergleichbaren Ausführungen auf der Grundlage einer mit einem heißen Treibmittel bewirkten Verdichtung sind ebenfalls Gegenstand der Erfindung. In dieser Ausprägung wird im Verdichter kein Gemisch, sondern ein Zweiphasengemisch gebildet.

Strahlverdichter, in der Ausführung entweder als Dampfstrahlverdichter oder Flüssigkeitsstrahl-Verdichter, nutzen die Energie eines(r) höher gespannten Dampfes / Flüssigkeit und verdichten hiermit niedrig gespannten Dampf auf ein mittleres Druckniveau. Hauptsächlich werden solche Strahlverdichter mit Wasserdampf oder Wasser betrieben und dienen auch meistens zum Verdichten von Wasserdampf. Grundsätzlich können die Strahlverdichter mit beliebigen Dämpfen / Flüssigkeiten betrieben werden und sind in der Lage, die unterschiedlichsten Dämpfe zu fördern.

Üblicherweise umfasst ein Strahlverdichter eine Düse für das Treibmittel im Anschluss mit einem einen Diffusor und einen Ansaugstutzen für das Arbeitsmittel. Mittels der Düse wird Druckenergie des Treibmittels in Geschwindigkeitsenergie umgesetzt. Der Treibmittelstrahl reißt über den Ansaugstutzen angesaugtes Arbeitsmittel mit sich wobei das Gemisch aus Arbeitsmittel und Treibmittel gebildet wird. Ferner gibt das Treibmittel seine Energie durch Impulsaustausch teilweise an das angesaugte Arbeitsmittel ab. Das entstandene Gemisch erfährt anschließend im Diffusor eine Verdichtung wobei der Druck des Gemisches auf ein mittleres Druckniveau zunimmt. D.h. dieser Druck des Gemisches ist niedriger als der Druck des Treibmittels vor Eintritt in die Düse des Strahlverdichters aber höher als der Druck des angesaugten Arbeitsmittels. Der Diffusor weist einen zunehmenden Querschnitt aufweist, so dass die Strömung verlangsamt wird, weshalb nach Bernoulli der statische Druck ansteigt.

Es kann bevorzugt sein, dass der Enddruck des Gemisches direkt nach der Verdichtung im Diffusor des Strahlverdichters höher ist, als der Druck im Verdampfer in dem das Arbeitsmittel verdampft wird, so dass die druckabhängige Kondensationstemperatur des Gemischeshöher ist, als die Verdampfungstemperatur des Arbeitsmittels, damit Wärme auf das Arbeitsmittel übertragen werden kann.

Strahlverdichter werden beim Eindampfen, Destillieren, Kühlen, Kristallisieren, Desodorieren, Entgasen und Trocknen eingesetzt.

Im Strahlverdichter wird entspanntes Arbeitsmittel aus dem ersten Kreislauf und Treibmittel aus dem zweiten Kreislauf verdichtet. Das Gemisch aus Arbeitsmittel und Treibmittel wird nachfolgend auch als Gemisch bezeichnet.

Erfindungsgemäß kann das Arbeitsmittel und Treibmittel aus gleichen Komponenten oder unterschiedlichen Komponenten bestehen.

In einer Trennvorrichtung werden Arbeitsmittel und Treibmittel getrennt.

Für den Fall, dass Arbeitsmittel und Trennmittel aus gleichen Komponenten besteht, wird in einer dem Strahlverdichter nachgeschalteten Trennvorrichtung ein erster Teilstrom als Arbeitsmittel in die Verdampfereinheit geführt, d.h. in den ersten Kreislauf, und ein zweiter Teilstrom als Treibmittel in den zweiten Kreislauf rückführt. Es versteht sich von selbst, dass die Verteilung von Arbeitsmittel und Treibmittel so gewählt sein sollte, dass die jeweiligen Kreisläufe nicht trocken laufen.

Für den Fall, dass Arbeitsmittel und Trennmittel aus unterschiedlichen Komponenten besteht, werden diese beispielsweise aufgrund unterschiedlicher physikalischer Eigenschaften, wie Dichteunterschiede, Nichtmischbarkeit, etc. getrennt. Es versteht sich von selbst, dass die Verteilung von Arbeitsmittel und Treibmittel so gewählt sein sollte, dass die jeweiligen Kreisläufe nicht trocken laufen.

Das Arbeitsmittel wird nach der Trennung in der Trenneinheit in die Verdampfereinheit rückgeführt und das Treibmittel wird in den Kollektor zur Wärmeenergieaufnahme rückgeführt.

Die Trenneinheit, auch Trennvorrichtung genannt, kann eine Niveauregulierung aufweisen. Die Niveauregulierung kann ein niveaugesteuertes Ventil sein.

Beispielsweise kann die Steuerung derart sein, dass in den beiden Verdampfern Treibmittel und Arbeitsmittel jeweils immer in hinreichender Menge vorhanden sind. Diese Bedingung kann beispielsweise durch mindestens einen Niveausensor in der Verdampfereinheit und/oder im Kollektor erfasst werden, mit denen Ventile in den jeweiligen Zuführungsleitungen angesteuert werden, so dass das Flüssigkeitsniveau in den Verdampfern beispielsweise zwischen einem eingestellten Minimal- und Maximalniveau schwankt.

Nachfolgend wird der Weg des Arbeitsmittels im ersten Kreislauf beschrieben. In der Verdampfereinheit wird flüssiges Arbeitsmittel verdampft. Die für die Verdampfung des flüssigen Arbeitsmittels im Verdampfer erforderliche Energie kann von einer externen Wärmequelle stammen und/oder durch Wärmeübertragung des Gemisches aus Arbeitsmittel und Treibmittel stammen. Vorzugsweise erfolgt die Wärmeübertragung ausschließlich von dem Gemisch. Die Wärmeübertragung erfolgt bevorzugt indem wenigstens eine Wärmeaustauschvorrichtung, beispielsweise in Form von Rohren, Platen, etc. im und/oder an der Verdampfereinheit angeordnet ist, so dass eine Wärmeübertragung auf das Arbeitsmittel erfolgen kann. Besonders bevorzugt wird Gemisch zur Wärmeübertragung verwendet, welches durch ein Rohr/e, welches an und/oder durch die Verdampfereinheit geführt wird. Wenn das Gemisch als Dampf vorliegt, kann es aufgrund der Wärmeübertragung kondensiert werden. Um eine Wärmeübertragung zu ermöglichen, ist es notwendig, dass die Temperatur des Gemisches zwecks Wärmeübertragung höher ist, als die Temperatur des Arbeitsmittels. Ferner ist es bevorzugt, dass der Druck des Gemisches zwecks Wärmeübertragung höher ist als der Druck des Arbeitsmittels im Verdampfer. Bevorzugt ist ein Temperaturunterschied zwischen Arbeitsmittel im Verdampfer und Gemisch ≥ 3° C bis ≤ 20° C, vorzugsweise ≥ 5° C bis ≤ 15° C und bevorzugt ≥ 7° C bis ≤ 10° C.

Das in der Verdampfereinheit, auch als Verdampfer bezeichnet, verdampfte Arbeitsmittel wird einer Entspannungsvorrichtung zugeführt. Vorzugsweise weist das dampfförmige Arbeitsmittel einen Druck im Bereich von 1,5 bar bis 5 bar, vorzugsweise 2 bar bis 4 bar auf.

Das dampfförmige Arbeitsmittel wird in der Entspannungsvorrichtung entspannt. Der Druck des dampfförmigen Arbeitsmittels nach der Druckentspannung im Verdampfer liegt im Bereich von 0,3 bar bis 3 bar, vorzugsweise 0,5 bar bis 1,5 bar. Besonders bevorzugt macht die Druckdifferenz des dampfförmigen Arbeitsmittels vor und nach der Druckentspannung 1 bar bis 4 bar, vorzugsweise 1,5 bar bis 3 bar auf.

Nach der Druckentspannung werden das dampfförmige Arbeitsmittel und Treibmittel aus dem zweiten Kreislauf dem Strahlverdichter, und somit in dem gemeinsamen Teilabschnitt, zugeleitet.

Das Treibmittel wird in einem Kollektor durch externe Wärmezuführung, beispielsweise Abwärme aus industriellen Prozessen und/oder von Verbrennungsprozessen, Geothermie, Solarwärme, und dergleichen, auf ein höheres Temperaturniveau gebracht.

Gemäß einer Ausführungsform wird flüssiges Treibmittel, was auf ein höheres Temperaturniveau gebracht wurde dem Strahlverdichter zugeführt.

Gemäß einer anderen Ausführungsform wird flüssiges Treibmittel im Kollektor verdampft, so dass dampfförmiges, auch als gasförmig bezeichnet, Treibmittel dem Strahlverdichter zugeführt wird.

Gemäß einer weiteren Ausführungsform weist der zweite Kreislauf wenigstens eine Entspannungsvorrichtung auf. Das in der Entspannungseinrichtung entspannte Treibmittel kann beispielsweise dem Gemisch nach dem Strahlverdichter zugeführt werden.

Das Verfahren zur Umwandlung von Wärmeenergie in mechanische, elektrische und/oder thermische Energie durch Entspannung eines gasförmigen Arbeitsmittels in einer mit einem Verdampfer verbundenen Entspannungsvorrichtung kann in einer bevorzugten Ausführungsform als Niederdruck-Entspannung durchgeführt werden, wobei
- das entspannte Arbeitsmittel mit einem der Entspannungsvorrichtung nachgeordneten Strahlverdichter verdichtet wird,
- dem Strahlverdichter ein im Kollektor erwärmtes Treibmittel zugeleitet wird,
- der Strahlverdichter so betrieben wird, dass die nach der Verdichtung erreichte Endtemperatur des Gemisches oberhalb der Verdampfungstemperatur des Arbeitsmittels im Verdampfer liegt, so dass das Gemisch aus Arbeitsmittel und Treibmittel im Wärmeaustausch gegen das im Verdampfer siedende flüssige Arbeitsmittel kondensiert,
- das Kondensat mit einer Pumpe in eine Trennvorrichtung gefördert wird, wobei die Pumpe von einer Entspannungseinrichtung, der Treibmittel vom Kollektor zugeführt wird, und
- aus der Trennvorrichtung über Zuleitungen, vorzugsweise mit einem niveaugesteuerten Schaltventil, Treibmittel zurück zum Kollektor und Arbeitsmittel zurück in den Verdampfer gefördert wird.

Die Temperatur des Treibmittels welche dem Strahlverdichter zugeführt wird sollte vorzugsweise oberhalb der Temperatur des Arbeitsmittels das dem Strahlverdichter zugeführt wird liegen. Ferner ist es vorteilhaft, dass die Temperatur des Treibmittels das dem Strahlverdichter zugeführt wird oberhalb der Temperatur des im Verdampfer verdampften Arbeitsmittels liegt.

Die Temperatur des Treibmittels, das dem Strahlverdichter zugeführt wird kann im Bereich von ≥ 40° C bis ≤ 200° C, vorzugsweise ≥ 70° C bis ≤ 150° C und bevorzugt ≥ 90° C bis ≤ 120° C liegen.

Gemäß einer Ausbildung der vorliegenden Erfindung kann im zweiten Kreislauf wenigstens eine Entspannungsvorrichtung angeordnet sein.

Es versteht sich von selbst, dass die Temperatur des Treibmittels zwecks Wärmeübertragung auf das Arbeitsmittel im Verdampfer höher ist als die Temperatur des Arbeitsmittels im Verdampfer.

Ferner kann es vorteilhaft sein, wenn der Druck des Treibmittels im zweiten Kreislauf immer höher ist, als der Druck des Arbeitsmittels im zweiten Kreislauf.

Ferner kann es vorteilhaft sein, dass der Arbeitsmittelkreislauf mehrere Arbeitsmittelteilströme umfasst. Jeder Arbeitsmittelteilstrom kann mindestens einen Verdampfer und/oder mindestens eine Entspannungsvorrichtung aufweisen.

Die Verwendung mehrerer Verdampfer kann den Vorteil haben, dass die Wärmeenergieaufnahme schneller auf das Arbeitsmittel übertragen werden kann, als wenn man nur einen Verdampfer einsetzt.

Beispielsweise können in einem Arbeitsmittelstrom mehrere Entspannungsvorrichtungen hintereinander geschaltete werden.

Gemäß einer bevorzugten Ausführungsform können beispielsweise in eine Arbeitsmittelstrom mindestens zwei, bevorzugt mindestens drei Entspannungsvorrichtungen in Reihe geschaltet werden.

Gleichermaßen können in einem Treibmittelstrom mehrere Entspannungsvorrichtungen hintereinander geschaltete werden.

Gemäß einer bevorzugten Ausführungsform können in einen Treibmittelstrom beispielsweise mindestens zwei, bevorzugt mindestens drei Entspannungsvorrichtungen in Reihe geschaltet werden.

Es kann vorteilhaft sein, dass der Treibmittelkreislauf mehrere Treibmittelteilströme umfasst. Jeder Treibmittelteilstrom kann mindestens einen Kollektor und/oder mindestens eine Entspannungsvorrichtung aufweisen.

Im Strahlverdichter werden Arbeitsmittel und Treibmittel zusammengeführt, wobei ein Gemisch ausgebildet wird. Das Arbeitsmittel im Gemisch erfährt eine Druck und Temperatur Erhöhung verglichen zu dem entspannten Arbeitsmittel im ersten Kreislauf. Dagegen erfährt das Treibmittel eine Temperatur und Druckerreduzierung im Vergleich zu dem Treibmittel vor dem Strahlverdichter und nach dem Kollektor im zweiten Kreislauf.

Das den Strahlverdichter verlassene Gemisch wird in einem gemeinsamen Teilabschnitt weitergeführt und wenigstens einer Wärmeübertragungseinheit zugeführt. Die Wärmeübertragungseinheit kann in und/oder am Verdampfer angeordnet sein. Vorzugsweise weist die Wärmeübertragungseinheit wenigstens ein Rohr, Rohrwendel oder ähnliches auf, welches in und/oder am Verdampfer zwecks Wärmeübertragung an das Arbeitsmittel im Verdampfer angeordnet ist.

Vorzugsweise erfolgt die Wärmeübertragung vom Gemisch auf das Arbeitsmittel im Verdampfer mittels Kondensation des Gemisches.

Das Gemisch wird nach der Wärmeübertragung einer Trenneinheit zugeführt, um Arbeitsmittel und Trennmittel voneinander zu trennen. Das Arbeitsmittel wird dann in den ersten Kreislauf rückgeführt und dem Verdampfer zwecks Verdampfung des Arbeitsmittels zugeführt. Das abgetrennte Treibmittel wird dann in den zweiten Kreislauf rückgeführt und dem Kollektorzwecks Wärmeenergieaufnahme zugeführt.

Der Transport von Arbeitsmittel, Trennmittel und/oder Gemisch kann mittels wenigstens einer Pumpe erfolgen.

Vorzugsweise ist wenigstens eine Pumpe in dem gemeinsamen Teilabschnitt zwischen der Wärmeübertragungseinheit und der Trennvorrichtung angeordnet.

Die zum Betreiben der Pumpe erforderliche Energie kann von einer Entspannungsvorrichtung und/oder einer Entspannungseinrichtung stammen. Dies ist vorteilhaft, da man so nicht auf zusätzliche Energiequellen, wie elektrische Energie und/oder fossile Brennstoffe angewiesen ist.

Das erfindungsgemäße Verfahren sieht die Umwandlung von Wärmeenergie in mechanische Energie durch eine Entspannung eines dampfförmigen Arbeitsmittels in einem mit dem Verdampfer verbundenen Entspannungsaggregat vor, das bereits im Niederdruckbereich, beispielsweise ≥ 3 bar und ≤ 8 bar, bevorzugt ≥ 2 bar und ≤ 6 bar und besonders bevorzugt ≥ 1,5 bar und ≤ 4 bar mit gutem Wirkungsgrad arbeitet.

Ein guter Wirkungsgrad im Sinne dieser Erfindung kann ein 60% Maschinen-Wirkungsgrad, bevorzugt mehr als 70%, noch mehr bevorzugt mehr als 80% Maschinen-Wirkungsgrad sein. Eine solche Niederdruck-Entspannungsvorrichtung kann erfindungsgemäß durch ein Wälzkolbengebläse mit gasdichtem Schöpfraum realisiert werden.

Ein Kollektor im Sinne dieser Erfindung ist beispielsweise ein Strahlungsempfänger, wie Sonnenkollektoren, Wärmeaustauschaggregate, Rohrleitungen und/oder Kühltürme.

Das Gemisch aus Treibmittel und entspanntem Arbeitsmittel hat nach der Verdichtung eine Temperatur, die höher liegt als die Verdampfungstemperatur im Verdampfer des Arbeitsmittels, so dass das Gemisch im Wärmeaustausch gegen das Arbeitsmittel im Verdampfer kondensiert werden kann. Dabei gibt das Gemisch seine Kondensationsenthalpie an das siedende Arbeitsmittel im Verdampfer ab. Das Kondensat wird anschließend von einer Fördereinrichtung in eine Trennvorrichtung in Arbeitsmittel und Treibmittel getrennt und so mit Druck beaufschlagt, dass das Treibmittel einerseits zurück zum Kollektor, andererseits das Arbeitsmittel, beispielsweise über ein niveaugesteuertes Schaltventil, zurück in den Verdampfer des ersten Arbeitsmittel-Kreislauf rückgeführt wird.

Ein Vorteil der vorliegenden Erfindung liegt in der Tatsache, dass für die Kondensation keine eigenständige Kühleinrichtung bzw. Kühlturm erforderlich sind. Dies ist dann besonders günstig, wenn am Standort keine Kühlmedien zur Verfügung stehen. Außerdem geht die Kondensationsenergie nicht an die Umgebung verloren, sondern wird weiter im Prozess genutzt. Dies wird möglich durch die Erwärmung des Gemisches über die Verdampfungstemperatur des Arbeitsmittels im ersten Kreislauf hinaus.

In einer weiteren bevorzugten Ausführung kann das erfindungsgemäße Verfahren für eine gleichzeitige Umwandlung von Wärme auf unterschiedlichen Temperaturniveaus in mechanische Energie ausgelegt werden.

Derartige Fälle sind in technischen Systemen vielfältig gegeben, beispielsweise bei Abwärmen aus Verbrennungsmotoren, wo im Abgas Temperaturen um etwa 300° bis 400° C, im Kühlwasser von etwa 90° bis 110° C vorliegen.

Weitere Beispiele sind vielfältig in Betrieben mit thermischen Prozessen anzutreffen, wo abhängig von den betreffenden Wärmequellen unterschiedliche Temperaturniveaus anzutreffen sind. Die Konfigurationen können jedoch auch bewusst herbeigeführt werden, indem beispielsweise Niedertemperatur-Wärmequellen, wie Geothermie oder Solarwärme aus nicht-konzentrierenden Kollektorsystemen mit Wärmequellen, die auch höhere Temperaturen erlauben, kombiniert werden, beispielsweise Öl- oder Gasbrenner-Systeme. Solche Kombinationen sind häufig auch in Form von Back-Up-Systemen anzutreffen, beispielsweise zur Überbrückung von Tag-Nacht-Schwankungen der Solarwärme.

Bei solchen Rahmenbedingungen mit zwei unterschiedlichen Temperaturniveaus, kann das mit einer Hochtemperatur-Wärmequelle erzeugte Treibmittel nicht nur zum Antrieb des Strahlverdichters genutzt, sondern zusätzlich selbst in einem zweiten Entspannungsaggregat entspannt werden.

Das entspannte Treibmittel bei der Hochdruckentspannung mit beispielsweise ≥ 6 bar und ≤ 20 bar, vorzugsweise > 10 bar und bevorzugt ≥ 15 bar, wird anschließend im Wärmeaustausch mit dem Verdampfer des Arbeitsmittels der "Niedertemperaturstufe" kondensiert.

Hierbei bedeutet "Niedertemperaturstufe" auch "Niederdruckstufe genannt", dass das entspannte Treibmittel aus der Hochdruckstufe noch so hoch sein muss, dass die druckabhängige Kondensationstemperatur niedriger ist als die Verdampfungstemperatur im Niederdruckverdampfer. Dabei wird die im entspannten Hochdruck-Treibmittel noch enthaltene Kondensationsenthalpie für den Niederdruckprozess genutzt. Ein anlagentechnischer Vorteil ergibt sich daraus, dass der Verdampfer der Niederdruckstufe gleichzeitig den Kondensator der Hochdruckstufe darstellt.

Bei dieser Ausführung kann das Verfahren mit nur einem Arbeitsmittel für Hochdruck- und Niederdruckstufe durchgeführt werden, sofern die thermodynamischen Daten des gewählten Arbeitsmittels auf die gegebenen Temperaturniveaus der beiden Wärmequellen abgestimmt sind (für Wasser als Arbeitsmittel bei etwa 170° C könnte die Hochdruckstufe bei etwa 8 bar, die Niederdruckstufe bei etwa 2 bar und die Verdampfungstemperatur bei 120° C).

Alternativ kann das erfindungsgemäße Verfahren jedoch auch mit einem Arbeitsmitteln und Trennmittel, welche sich chemisch unterscheiden, für den "Hochdruckkreislauf" und den "Niederdruck-Kreislauf" durchgeführt werden. In diesem Fall wird es dann erforderlich, in der Trennvorrichtung die beiden Arbeitsmittel und Trennmittel voneinander zu trennen.

Am einfachsten gelingt dies bei nicht-mischbaren Flüssigkeiten, die sich im Trennvorrichtung entmischen und nach dem spezifischen Gewicht schwerkraftmäßig trennen.

Das erfinderische Merkmal, dass durch die Funktionsweise des Strahlverdichters der entspannte Treibmittel auf ein Temperaturniveau transformiert wird, dass er in den Verdampfer zurückgeführt werden kann, wodurch eine zusätzliche externe Kühlvorrichtung für die Kondensation vermieden wird, bietet in einer weiteren bevorzugten Ausführung des erfindungsgemäßen Verfahrens die Möglichkeit, die Verdampfung des Arbeitsmittels grundsätzlich auch unterhalb der durchschnittlichen Umgebungstemperatur durchzuführen, so dass, ähnlich wie bei einer Wärmepumpe, die Umgebungswärme selbst als Wärmequelle für die Verdampfung des Arbeitsmittels genutzt werden kann. In dieser Ausführung kommen Arbeitsmittel zur Anwendung, deren Siedepunkt so niedrig liegt, dass der im Verdampfer erzeugte Dampf bei den üblichen Umgebungsbedingungen einen Druck von ≥ 2 bar, bevorzugt ≥ 3 bar und ≤ 5 bar, aufweist.

Um das gebildete Gemisch zusätzlich im Verdampfer zu kondensieren, müssen die Siedetemperatur im Verdampfer und Druck und Temperatur des Gemisches nach der Verdichtung so aufeinander abgestimmt sein, dass das Gemisch im gemeinsamen Telabschnitt durch Wärmeübertragung mit siedenden Arbeitsmittel im Verdampfer des ersten Kreislaufs kondensiert werden kann.

Das Arbeitsmittel kann eine Siedetemperatur zwischen -20° C und 80° C, bevorzugt zwischen 10° C und 60° C aufweisen.

In dieser Ausführung kann das erfindungsgemäße Verfahren so betrieben werden, dass der erste Kreislauf des Arbeitsmittels mit der Umgebungswärme bei Temperaturen von beispielsweise bis zu 40° C, der zweite Kreislauf des Treibmittels mit nicht-konzentrierenden, flächigen Solarkollektoren, die Vorlauftemperaturen zwischen 80° C und etwa 120° C erreichen, beheizt werden. Dadurch kann die Anlage allein mit der unerschöpflichen und kostenfreien Solarwärme angetrieben werden, wobei ein Teil der Antriebsenergie im Verdampfer mehrfach zur Bildung von Treibmittel genutzt wird. Zusätzlich benötigt die Anordnung keine getrennte Kühleinrichtung, was gerade an vielen sonnenreichen Standorten, etwa in Südeuropa oder Afrika, ein großer Vorteil ist.

Über die bisher beschriebenen Ausführungen hinaus bietet das erfindungsgemäße Verfahren als zusätzliches erfinderisches Merkmal die Möglichkeit, die Antriebe jeglicher mechanischer Fördereinrichtungen über eine Entspannungsturbine, die mit Treibmittel aus dem Kollektor oder der Wärmequelle angetrieben wird, anzutreiben. Der Vorteil dieser Anordnung liegt in dem vollständigen Verzicht auf jegliche externe mechanische und elektrische Hilfsenergien zur Umsetzung des Verfahrens und für den Betrieb einer zugehörigen Anlage.

Eine Entspannungseinrichtung, wie Entspannungsturbine, gemäß der vorliegenden Erfindung kann mit einer Druckdifferenz von mehr als 3 bar, bevorzugt mehr als 5 bar bis 20 bar betrieben werden. Diese Entspannungsturbine soll ausdrücklich als "rein" mechanisches Antriebsaggregat für die Förderpumpe dienen, damit hier ein elektrischer Antrieb für eine herkömmliche mechanische Pumpe vermieden wird. Mit dem erfindungsgemäßen Verfahren kann so ein Prozess realisiert werden, der direkt aus der Solarwärme Strom gewinnt, jedoch keine Photovoltaik darstellt.

Dadurch ist die nach dem erfindungsgemäßen Verfahren aufgebaute Anlage in der Lage, aus dem Ruhezustand allein durch die aufgenommene Wärmeenergie anzufahren, ohne dass in irgendeiner Form eine mechanische oder elektrische Starterenergie erforderlich wird.

Grundsätzlich kann Wärmeenergie in beliebiger Form zur Verfügung gestellt werden, neben der Solarenergie beispielsweise auch als fossile Energie oder Bioenergie. Auch kann sie in Form von Abwärme zur Verfügung gestellt werden, die entweder direkt oder nach Transformation mit Hilfe einer oder mehrerer Wärmepumpe/n für das erfindungsgemäße Verfahrengenutzt wird.

Damit können die Energiequelle/n zur Erzeugung der für den Antrieb des Strahlverdichters benötigten Wärmeenergie neben einem Kollektor, beispielsweise ein Solarkollektor, auch eine Abgaswärmequelle, eine Abwärmequelle von Verbrennungsprozessen, eine geothermische Quelle, eine Wärmepumpe, eine Brennstoffzelle, eine Abwärmequelle von Kühlprozessen, ein Verbrennungsmotor, ein Blockheizkraftwerk sein.

Bevorzugt ist die Bereitstellung von Wärmeenergie aus der Umgebungs- oder Solarwärme, bevorzugt mit nicht-konzentrierenden Kollektorsystemen, mit Verwendung ausgewählter geeigneter Arbeitsmittel hinsichtlich der Siedetemperatur und des erreichbaren Verdampfungsdrucks, alternativ auch in Kombination mit konzentrierenden Kollektorsystemen, mit denen höhere Temperaturen bereitgestellt werden können, oder einer anderen Wärmequelle, die Wärme auf einem hinreichend hohen Temperaturniveau bereitstellt, um den erforderlichen Treibmittel für den Strahlverdichter zu erzeugen.

Ein weiterer Gegenstand der Erfindung betrifft eine Anlage zur Umwandlung von Wärmeenergie aus der Solarstrahlung in mechanische, elektrische und/oder thermische Energie.

Die erfindungsgemäße Anlage zur Umwandlung von Wärmeenergie in mechanische, elektrische und/oder thermische Energie umfasst wenigstens eine Niederdruck-Entspannungsvorrichtung und wenigstens einen Strahlverdichter.

Vorzugsweise umfasst die Anlage weiterhin:
- einen ersten Kreislauf in dem ein Arbeitsmittel geführt wird,
- einen zweiten Kreislauf in dem ein Treibmittel geführt wird,
- einen gemeinsamen Teilabschnitt, in dem ein Arbeitsmittel und Treibmittel gemeinsam geführt werden.

Die Anlage zur Umwandlung von Wärmeenergie in mechanische, elektrische und/oder umfasst insbesondere wenigstens eine Verdampfereinheit, eine damit in Verbindung stehende Entspannungsvorrichtung und wenigstens einen Strahlverdichter, einen ersten Kreislauf in dem ein Arbeitsmittel geführt wird, einen zweiten Kreislauf in dem ein Treibmittel geführt wird, einen gemeinsamen Teilabschnitt, in dem Arbeitsmittel und Treibmittel gemeinsam geführt werden und eine Trennvorrichtung in der Arbeitsmittel und Treibmittel getrennt werden und einen Kollektor zur Erwärmung des Treibmittels, wobei die Wärmeenergie des Gemisches in dem gemeinsamen Teilabschnitt zur Verdampfung von Arbeitsmittel in der Verdampfereinheit genutzt wird. Wenigstens ein Teilstrom des Treibmittels wird nach dem Kollektor abgezweigt durch den Arbeitsmittel-Verdampfer geleitet und/oder an dem Arbeitsmittel-Verdampfer vorbeigeleitet, zwecks Wärmeübertragung an das Arbeitsmittel im Verdampfer. Anschließend wird das Treibmittel in den Kollektor rückgeführt. Ferner wird wenigstens ein Teilstrom nach dem Kollektor abgezweigt und wenigstens einer Entspannungsvorrichtung zugeführt. Das entspannte Treibmittel des abgezweigten Teilstroms wird dann durch den Arbeitsmittel-Verdampfer geführt und/oder an dem Arbeitsmittel-Verdampfer vorbeigeführt, zwecks Wärmeübertragung an das Arbeitsmittel im Verdampfer. Anschließend wird das Treibmittel in den Kollektor rückgeführt. In der Teilstromführung des zweiten Kreislaufes ist zusätzlich wenigstens eine Entspannungseinrichtung, beispielsweise Turbine, angeordnet, die als Antrieb einer Pumpe genutzt wird.

Eine Verdampfereinheit zum Verdampfen des Arbeitsmittels und nachfolgend eine Entspannungsvorrichtung, vorzugsweise eine Niederdruck-Entspannungsvorrichtung, zum entspannen des Arbeitsmittels sind im ersten Kreislauf angeordnet.

Im zweiten Kreislauf ist wenigstens ein Kollektor zur Wärmeenergieaufnahme des Treibmittels angeordnet.

Im gemeinsamen Teilabschnitt ist wenigstens eine Trennvorrichtung zur Trennung von Arbeitsmittel und Treibmittel angeordnet.

Vorzugsweise ist der erste und zweite Kreislauf mit dem Strahlverdichter verbunden, der Strahlverdichter und die Trennvorrichtung sind über den gemeinsamen Teilabschnitt verbunden und die Trennvorrichtung ist mit einem ersten und zweiten Kreislauf verbunden. Erfindungsgemäß wird eine Anlage zur Umwandlung von Wärmeenergie aus der Solarstrahlung in mechanische, elektrische und/oder thermische Energie zur Verfügung gestellt, die folgende Bauteile umfasst:
a) eine Verdampfereinheit, in der ein Arbeitsmittel verdampfbar ist,
b) eine Entspannungsvorrichtung, die optional mit einem Generator verbunden ist, wobei die Entspannungsvorrichtung, vorzugsweise Niederdruck-Entspannungsvorrichtung, der Verdampfereinheit nachgeschaltet ist,
c) ein Strahlverdichter, der der Entspannungsvorrichtung nachgeschaltet ist, und in dem das entspannte dampfförmige Arbeitsmittel verdichtet wird,
d) ein Kollektor als Sammler der Wärmeenergie, mit dem Treibmittel auf ein höheres Temperaturniveau gebracht wird,
e) eine Pumpe und eine Trennvorrichtung mit wenigstens einem Ventil, in der das Gemisch in Arbeitsmittel und Treibmittel getrennt wird,
f) eine Entspannungseinrichtung, vorzugsweise eine Entspannungsturbine, die die Pumpe antreibt,
g) gegebenenfalls eine weitere Niederdruck-Entspannungsvorrichtung mit angekoppeltem Generator, die in dem zweiten Kreislauf nach dem Kollektor angeordnet ist,
h) gegebenenfalls eine Flüssigkeitsförderpumpe zur Druckerhöhung, wenn der Strahlverdichter mit einer Flüssigkeit angetrieben wird.

Die erfindungsgemäße Anlage kann so ausgestaltet sein, dass an und/oder durch die Verdampfereinheit Treibmittel und/oder Gemisch zwecks Wärmeübertragung, an das Arbeitsmittel geleitet wird, wobei das Treibmittel und/oder Gemisch vorzugsweise durch eine Rohrleitung und/oder Rohrwendel an und/oder in den Verdampfer geführt wird.

Die erfindungsgemäße Anlage kann beispielsweise drei Treibmittel Teilströme umfassen, wobei vorzugsweise ein erster Teilstrom des Treibmittel zu einer Entspannungsvorrichtung führt, ein zweiter Teilstrom des Treibmittels in einen Strahlverdichter führt und ein dritter Teilstrom in eine Entspannungseinrichtung führt.

Es kann bevorzugt sein, dass der erste Teilstrom des Treibmittels nach der Entspannungsvorrichtung an und/oder durch den Verdampfer in den Kollektor rückgeführt wird, der zweite Teilstrom des Treibmittels in dem Strahlverdichter mit Arbeitsmittel vermischt wird und dann im gemeinsamen Teilabschnitt bis zur Trennvorrichtung geführt wird und nach der Trennung dann in den Kollektor rückgeleitet wird und der dritte Teilstrom nach der Entspannungseinrichtung dem Gemisch nach dem Strahlverdichter zugeführt wird.

Die Leitung des Arbeitsmittels, Treibmittels und/oder Gemisches erfolgt, wenn nicht anders angegeben vorzugsweise durch Rohrleitungen. Zur Vermeidung von Wärmeverlusten ist es vorteilhaft, dass die Rohrleitungen eine Wärmedämmung aufweisen, soweit dies Vorteilhaft ist.

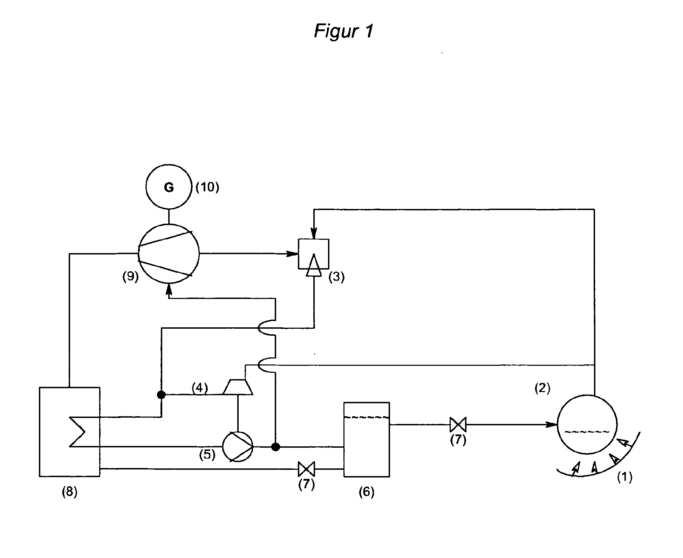

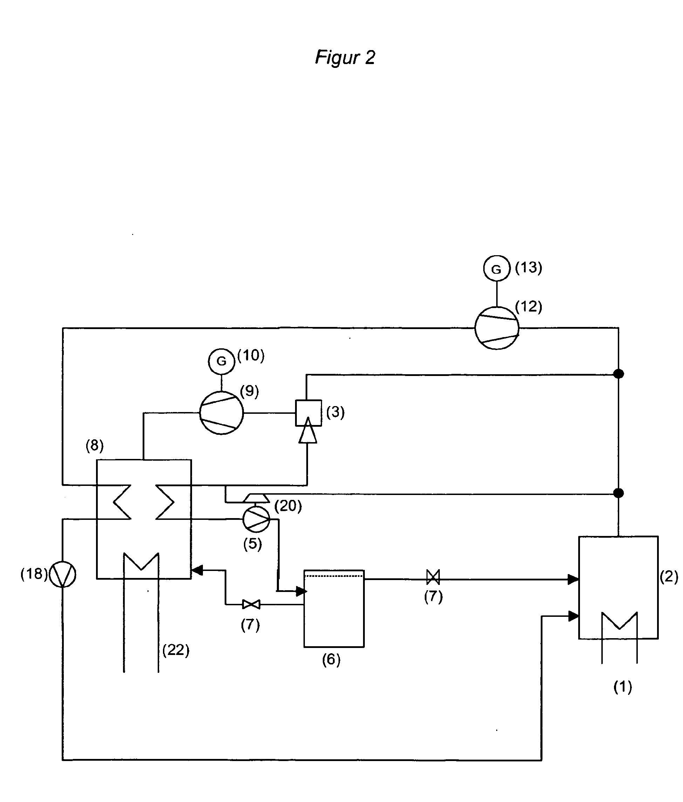

Weitere Vorteile, Merkmale und Einzelheiten der Erfindung ergeben sich aus der nachfolgenden Beschreibung, in der in Bezugnahme auf Figur 1 und Figur 2 Ausführungsbeispiele der Erfindung im Einzelnen beschrieben wird.

Es zeigt
- *Figur 1*: eine Anlage zur Umwandlung von Wärmeenergie in mechanische, elektrische und/oder thermische Energie.
- *Figur 2*: eine Anlage zur Umwandlung von Wärmeenergie in mechanische, elektrische und /oder thermische Energie in zweistufiger Ausführung

In Figur 1 wird als Beispiel eine Umwandlung von Solarwärme mit einem konzentrierenden Parabolrinnenkollektor (2) zur Erzeugung des Treibmittels für den Strahlverdichter dargestellt.

Die aus der Energiequelle (1) "Solarstrahlung" in einem Kollektor (2) anfallende Wärmeenergie erwärmt Treibmittel für einen Strahlverdichter (3). Bei der Entspannung des Treibmittels, im Strahlverdichter (3) überträgt das Treibmittel Wärmeenergie auf das dampfförmige Arbeitsmittel, das in einer Verdampfereinheit (8) verdampft und in einer dem Verdampfer nachgeordneten Entspannungsvorrichtung (9), vorzugsweise Niederdruck-Entspannungsvorrichtung (9), entspannt worden ist. Arbeitsmittel und Treibmittel sind chemisch gleich, so dass bei der Durchmischung im Strahlverdichter (3) eine homogene Dampfphase gebildet wird.

Die Anlage wird so betrieben, dass das Druckniveau und damit die Temperatur des Gemisches aus Arbeitsmittel und Treibmittel höher ist als der Druck und die Siedetemperatur des im Verdampfer (8) siedenden Arbeitsmittels. Deshalb kann das Gemisch des gemeinsamen Teilabschnitts seine Kondensationsenergie durch Wärmeenergieübertragung bei Durchleitung durch den Verdampfer (8) auf das im Verdampfer (8) siedende Arbeitsmittel übertragen. Das Kondensat des Gemisches wird in einer Trennvorrichtung (6) getrennt und mittels einer Pumpe Treibmittel einerseits zurück in den einen Sonnenkollektor (2) aufweisenden zweiten Kreislauf, andererseits Arbeitsmitte in den ersten Kreislauf über eine mit einem niveaugesteuerten Ventil versehene Zuleitung zurück in den Verdampfer (8) gefördert. Die Pumpe (5) wird von einer Entspannungsvorrichtung (4), vorzugsweise Entspannungsturbine (4), angetrieben, die mit Treibmittel aus dem Solarkollektor (2) beaufschlagt wird.

In Figur 2 wird eine Ausführungsform mit zwei Wärmequellen auf jeweils zwei unterschiedlichen Temperaturniveaus dargestellt. Dabei wird eine Umwandlung der Abwärmen aus einem Blockheizkraftwerk und aus einem Kühlwasser der Motorkühlung zugrunde gelegt, wobei die Abgase als Wärmequelle auf höherem Temperaturniveau und das Kühlwasser der Motorkühlung als Niedertemperatur-Wärmequelle anzusehen sind. In den Kollektor (2) des zweiten Kreislaufes enthaltend Treibmittel wird Wärme aus dem Abgasstrom eines Verbrennungsmotors zugeführt, der das im Kollektor befindliche Treibmittel verdampft. Ein erster Teilstrom des Treibmitteldampfs wird dem Strahlverdichter (3) zugeführt. Der zweite Teilstrom des Treibmitteldampfes wird einer Entspannungsvorrichtung (12) zugeführt und entspannt, wobei mit einem angeschlossenen Generator (13) mechanische Energie in elektrische Energie umgewandelt wird. Nach der Entspannung des Treibmitteldampfes des zweiten Teilstroms wird der Treibmitteldampf durch die Arbeitsmittel-Verdampfereinheit (8) geleitet wobei der Treibmitteldampf Wärmeenergie an das Arbeitsmittel zwecks Verdampfung abgibt und dabei kondensiert. Das kondensierte Treibmittel des zweiten Teilstroms wird mit der Förderpumpe (18) in Kollektor rückgeführt. Das verdampfte Treibmittel des ersten Teilstroms das dem Strahlverdichter (3) zugeführt wird, bildet mit dem dem Strahlverdichter (3) zugeführten Arbeitsmittel des ersten Kreislaufs unter Ausbildung eines Gemisches gemischt. Ferner wird das im Verdampfer (8) verdampfte Arbeitsmittel in einer Entspannungsvorrichtung (9) die mit einem Generator (10) verbunden ist entspannt. Das entspannte Arbeitsmittel des ersten Kreislaufes wird dem Strahlverdichter (3) zugeführt. In dem gemeinsamen Teilabschnitt wird das Gemisch aus Arbeitsmittel und Treibmittel vom Strahlverdichter (3) durch die Verdampfereinheit (8) hindurchgeleitet zwecks Wärmeübertragung von Wärmeenergie des Gemisches auf das Arbeitsmittel, um das Arbeitsmittel im Verdampfer (8) zu verdampfen. Das bei der Wärmeübertragung kondensierte Gemisch wird in die Trennvorrichtung (6) mittels der Pumpe (5) gefördert. In der Trennvorrichtung wird das Gemisch getrennt und Arbeitsmittel in den Verdampfer (8) rückgeführt und Treibmittel in den Kollektor (2) rückgeführt. Die Pumpe (5) wird von einer Entspannungseinrichtung (20) angetrieben, die über einen dritten Teilstrom des Treibmittels nach dem Kollektor (2) angetrieben wird, wobei der dritte Teilstrom anschließend entweder dem Gemisch und/oder zweiten Teilstrom vor der Pumpe (18) zugeleitet wird.

### Bezugszeichenliste

- 1: Energiequelle
- 2: Kollektor
- 3: Strahlverdichter
- 4: Entspannungseinrichtung
- 5: Pumpe
- 6: Trennvorrichtung
- 7: Ventil
- 8: Verdampfer
- 9: Entspannungsvorrichtung
- 10: Generator
- 12: Entspannungsvorrichtung
- 13: Generator
- 18: Pumpe
- 20: Entspannungseinrichtung
- 22: Energiequelle

## Patentansprüche

1. Verfahren zur Umwandlung von Wärmeenergie in mechanische, elektrische und/oder thermische Energie, wobei das Verfahren wenigstens zwei Kreisläufe, die durch wenigstens einen gemeinsamen Teilabschnitt verbunden sind, umfasst, wobei der erste Kreislauf wenigstens eine Entspannungsvorrichtung (9) aufweist, wobei in dem ersten Kreislauf ein Arbeitsmittel und in dem zweiten Kreislauf ein Treibmittel und in dem gemeinsamen Teilabschnitt ein Gemisch aus Arbeitsmittel und Treibmittel geführt werden, wobei das Arbeitsmittel in den ersten Kreislauf rückgeführt und einer Verdampfereinheit (8) zugeführt wird, wobei der gemeinsame Teilabschnitt mit dem ersten und zweiten Kreislauf über wenigstens einen Strahlverdichter (3) verbunden ist, wobei das im Strahlverdichter (3) gebildete Gemisch nachfolgend in einer Trennvorrichtung (6) in Arbeitsmittelstrom und Treibmittelstrom getrennt wird, wobei das verdampfte Arbeitsmittel der Entspannungsvorrichtung (9) und nachfolgend dem Strahlverdichter (3) zugeleitet wird **dadurch gekennzeichnet, dass** abgetrenntes Treibmittel in den zweiten Kreislauf rückgeführt wird und zwecks Wärmeenergieaufnahme einem Kollektor (2) zugeleitet und nach der Wärmeenergieaufnahme dem Strahlverdichter (3) zugeführt wird, wobei wenigstens eine weitere Entspannungseinrichtung (4, 20) in einem Teilstrom des zweiten Kreislaufes des Treibmittels nach dem Kollektor (2) angeordnet ist, um eine Pumpe (5, 18) anzutreiben, die Arbeitsmittel, Treibmittel und/oder Gemisch weiterleitet.

2. Verfahren zur Umwandlung von Wärmeenergie in mechanische, elektrische und/oder thermische Energie nach Anspruch 1, **dadurch gekennzeichnet, dass** die Entspannungsvorrichtung (9) eine Niederruckentspannungsvorrichtung ist, vorzugsweise wenigstens ein Wälzkolbengebläse (9), eine Ovalradpumpe und/oder ein Schraubenexpander, bevorzugt mit gasdichtem Schöpfraum ist, wobei ein Wälzkolbengebläse (9) am meisten bevorzugt ist.

3. Verfahren zur Umwandlung von Wärmeenergie in mechanische, elektrische und/oder thermische Energie nach Anspruch 1 oder 2, **dadurch gekennzeichnet, dass** die Temperatur und der Druck des Gemisches aus Treibmittel und angesaugtem Arbeitsmitteldampf zum Zeitpunkt der Übertragung von Wärmeenergie auf das Arbeitsmittel zwecks Verdampfung im Verdampfer (8) höher ist als das im Verdampfer (8) befindliche zu verdampfende Arbeitsmittel.

4. Verfahren zur Umwandlung von Wärmeenergie in mechanische, elektrische und/oder thermische Energie nach einem der vorherigen Ansprüche, **dadurch gekennzeichnet, dass** kondensiertes Treibmittel zumindest teilweise zwecks Verdampfung zur externen Wärmequelle rückgeführt wird.

5. Verfahren zur Umwandlung von Wärmeenergie in mechanische, elektrische und/oder thermische Energie nach einem der vorherigen Ansprüche, **dadurch gekennzeichnet, dass** bei der Wärmeenergieübertragung von dampfförmigen Treibmittel an das im Verdampfer (8) befindliche Arbeitsmittel kondensiertes Treibmittel in einen Trennvorrichtung (6) rückgeführt wird, wobei der Trennvorrichtung (6) vorzugsweise eine Flüssigkeits-Niveauregulierung aufweist.

6. Verfahren zur Umwandlung von Wärmeenergie in mechanische, elektrische und/oder thermische Energie nach einem der vorherigen Ansprüche durch Entspannung eines gasförmigen Arbeitsmittels in einer mit einem Verdampfer (8) verbundenen Entspannungsvorrichtung (9),
**dadurch gekennzeichnet, dass**
- die Entspannung als Niederdruck-Entspannung durchgeführt wird,
- das entspannte Arbeitsmittel mit einem der Entspannungsvorrichtung (9) nachgeordneten Strahlverdichter (3) verdichtet wird,
- dem Strahlverdichter (3) ein im Kollektor (2) erwärmtes Treibmittel zugeleitet wird,
- der Strahlverdichter so betrieben wird, dass die nach der Verdichtung erreichte Endtemperatur des Gemisches oberhalb der Verdampfungstemperatur des Arbeitsmittels im Verdampfer (8) liegt, so dass das Gemisch aus Arbeitsmittel und Treibmittel im Wärmeaustausch gegen das im Verdampfer (8) siedende flüssige Arbeitsmittel kondensiert,
- das Kondensat mit einer Pumpe (5) in eine Trennvorrichtung (6) gefördert wird, wobei die Pumpe (5) von einer Entspannungseinrichtung (4), der Treibmittel vom Kollektor (2) zugeführt wird, und
- aus der Trennvorrichtung (6) über Zuleitungen, vorzugsweise mit einem niveaugesteuerten Schaltventil, Treibmittel zurück zum Kollektor (2) und Arbeitsmittel zurück in den Verdampfer (8) gefördert wird.

7. Verfahren nach einem der vorherigen Ansprüche, **dadurch gekennzeichnet, dass** die Wärmeenergie, die in den Kollektor (2) oder den Verdampfer (8) eingespeist wird, zumindest teilweise von einer Energiequelle (1) umfassend Abgaswärme, Abwärme von Verbrennungsprozessen, geothermische Quellen, Sonnenkollektoren, Wärmepumpen, Brennstoffzellen, Abwärme von Kühlprozessen, Umgebungswärmen aus Luft oder Wasser, einen Verbrennungsmotor, einem Blockheizkraftwerk stammt.

8. Verfahren nach einem der vorherigen Ansprüche, **dadurch gekennzeichnet, dass** das im Kollektor (2) erzeugte Treibmittel nicht nur in den Strahlverdichter (3) eingespeist wird, sondern zusätzlich über eine Entspannungsvorrichtung (12) entspannt wird.

9. Verfahren nach einem der vorherigen Ansprüche, **dadurch gekennzeichnet, dass** die Entspannung des Treibmittels eine Entspannungsvorrichtung (12) so betreibt, dass das entspannte Treibmittel direkt im Wärmeaustausch mit dem siedenden Arbeitsmittel im Verdampfer (8) kondensiert werden kann, und das Kondensat mit einer Pumpe (18) zurück in den Kollektor gefördert wird.

10. Verfahren nach einem der vorhergehenden Ansprüche, **dadurch gekennzeichnet, dass** wenigstens eine Entspannungsvorrichtung/en (9, 12) zur Umwandlung von Wärmeenergie in mechanische und/oder elektrische Energie mit einem Generator (10, 13) verbunden ist.

11. Verfahren nach einem der vorhergehenden Ansprüche, **dadurch gekennzeichnet, dass** das in der Entspannungseinrichtung (4) entspannte Treibmittel dem Gemisch nach dem Strahlverdichter (3) zugeführt wird.

12. Anlage zur Umwandlung von Wärmeenergie in mechanische, elektrische und/oder thermische Energie nach einem der Ansprüche 1 bis 11 umfassend wenigstens eine Verdampfereinheit (8) eine damit in Verbindung stehende Entspannungsvorrichtung (9) und wenigstens einen Strahlverdichter (3), einen ersten Kreislauf in dem ein Arbeitsmittel geführt wird, einen zweiten Kreislauf in dem ein Treibmittel geführt wird, einen gemeinsamen Teilabschnitt, in dem Arbeitsmittel und Treibmittel gemeinsam geführt werden und eine Trennvorrichtung (6) in der Arbeitsmittel und Treibmittel getrennt werden und einen Kollektor (2) zur Erwärmung des Treibmittels, wobei die Wärmeenergie des Gemisches in dem gemeinsamen Teilabschnitt zur Verdampfung von Arbeitsmittel in der Verdampfereinheit (8) genutzt wird, wobei wenigstens eine weitere Entspannungseinrichtung (4, 20) in einem Teilstrom des zweiten Kreislaufes des Treibmittels nach dem Kollektor (2) angeordnet ist, um eine Pumpe (5, 18) anzutreiben, die Arbeitsmittel, Treibmittel und/oder Gemisch weiterleitet.

13. Anlage nach Anspruch 12, umfassend eine Verdampfereinheit (8) zum Verdampfen des Arbeitsmittels und nachfolgend eine Niederdruck-Entspannungsvorrichtung (9) zum entspannen des Arbeitsmittels angeordnet im ersten Kreislauf, einen Kollektor angeordnet im zweiten Kreislauf zur Wärmeenergieaufnahme des Treibmittels und eine Trennvorrichtung angeordnet im gemeinsamen Teilabschnitt zur Trennung von Arbeitsmittel und Treibmittel.

14. Anlage nach Anspruch 12 oder 13, wobei der erste und zweite Kreislauf mit dem Strahlverdichter (3) verbunden sind und der Strahlverdichter (3) und die Trennvorrichtung (6) über den gemeinsamen Teilabschnitt verbunden sind und die Trennvorrichtung (6) mit einem ersten und einem zweiten Kreislauf verbunden ist.

15. Anlage nach Anspruch 12 bis 14, umfassend wenigstens zwei, vorzugsweise drei Treibmittel Teilströme, wobei vorzugsweise ein erster Teilstrom des Treibmittel zu einer Entspannungsvorrichtung (12) führt, ein zweiter Teilstrom des Treibmittels in einen Strahlverdichter (3) führt und ein dritter Teilstrom in eine Entspannungseinrichtung (20) führt.

16. Anlage nach Anspruch 12 bis 15, umfassend:
a) eine Verdampfereinheit (8), in der ein Arbeitsmittel verdampfbar ist,
b) eine Entspannungsvorrichtung (9), die optional mit einem Generator (10) verbunden ist, wobei die Entspannungsvorrichtung (9), vorzugsweise Niederdruck-Entspannungsvorrichtung (9), der Verdampfereinheit (8) nachgeschaltet ist,
c) ein Strahlverdichter (3), der der Entspannungsvorrichtung (9) nachgeschaltet ist, und in dem das entspannte dampfförmige Arbeitsmittel verdichtet wird,
d) ein Kollektor (2) als Sammler der Wärmeenergie, mit dem Treibmittel auf ein höheres Temperaturniveau gebracht wird,
e) eine Pumpe (5) und eine Trennvorrichtung (6) mit wenigstens einem Ventil (7), in der das Gemisch in Arbeitsmittel und Treibmittel getrennt wird,
f) eine Entspannungseinrichtung (4), vorzugsweise eine Entspannungsturbine (4), die die Pumpe (5) antreibt,
g) gegebenenfalls eine weitere Niederdruck-Entspannungsvorrichtung (12) mit angekoppeltem Generator (13), die in dem zweiten Kreislauf nach dem Kollektor angeordnet ist,
h) gegebenenfalls eine Flüssigkeitsförderpumpe zur Druckerhöhung, wenn der Strahlverdichter (3) mit einer Flüssigkeit angetrieben wird.

17. Anlage nach einem der vorhergehenden Ansprüche 12 bis 16,
**dadurch gekennzeichnet, dass** die Entspannungsvorrichtung (9, 12) mit einem Generator (10, 13) verbunden ist, der mechanische Energie in elektrische Energie umwandelt.

18. Anlage nach einem der vorhergehenden Ansprüche 12 bis 17 die nach einem der vorhergenannten Ansprüche 1 bis 11 betreibbar ist.

## Claims

1. Method for the conversion of heat energy into mechanical, electrical and/or thermal energy, the method comprising at least two circuits, which are connected by at least one common subsection, the first circuit having at least one expansion device (9), a working medium being carried in the first circuit and a propellant being carried in the second circuit and a mixture of working medium and propellant being carried in the common subsection, the working medium being returned to the first circuit and fed to an evaporator unit (8), the common subsection being connected to the first and second circuits by way of at least one jet compressor (3), the mixture that is formed in the jet compressor (3) subsequently being separated in a separating device (6) into a working medium stream and a propellant stream, and the evaporated working medium being delivered to the expansion device (9) and subsequently to the jet compressor (3), **characterized in that** separated propellant is returned to the second circuit and delivered to a collector (2) for the purpose of heat energy absorption and fed to the jet compressor (3) after the heat energy absorption, and at least one further expansion device (4, 20) being arranged in a partial stream of the second circuit of the propellant after the collector (2), in order to drive a pump (5, 18), which passes on working medium, propellant and/or mixture.

2. Method for the conversion of heat energy into mechanical, electrical and/or thermal energy according to Claim 1, **characterized in that** the expansion device (3) is a low-pressure expansion device, preferably at least one Roots blower (9), an oval-wheel pump and/or a screw expander, preferably with a gas-tight suction chamber, a Roots blower (9) being most preferred.

3. Method for the conversion of heat energy into mechanical, electrical and/or thermal energy according to Claim 1 or 2, **characterized in that** the temperature and pressure of the mixture of propellant and sucked-in working medium vapour at the time of the transfer of heat energy to the working medium for the purpose of evaporation in the evaporator (8) are higher than those of the working medium to be evaporated that is located in the evaporator (8).

4. Method for the conversion of heat energy into mechanical, electrical and/or thermal energy according to one of the preceding claims, **characterized in that** condensed propellant is at least partially returned to the external heat source for the purpose of evaporation.

5. Method for the conversion of heat energy into mechanical, electrical and/or thermal energy according to one of the preceding claims, **characterized in that** propellant condensed during the transfer of heat energy from vaporous propellant to the working medium located in the evaporator (8) is returned to a separating device (6), the separating device (6) preferably having a liquid level control.

6. Method for the conversion of heat energy into mechanical, electrical and/or thermal energy according to one of the preceding claims by expansion of a gaseous working medium in an expansion device (9) connected to an evaporator (8),
**characterized in that**
- the expansion is carried out as low-pressure expansion,
- the expanded working medium is compressed by a jet compressor (3) arranged downstream of the expansion device (9),
- a propellant heated in the collector (2) is delivered to the jet compressor (3),
- the jet compressor is operated such that the final temperature of the mixture that is reached after the compression lies above the evaporation temperature of the working medium in the evaporator (8), so that the mixture of working medium and propellant condenses in the heat exchange with the liquid working medium boiling in the evaporator (8),
- the condensate is transported by a pump (5) into a separating device (6), the pump (5) being driven by an expansion device (4), which is fed propellant from the collector (2), and
- propellant being transported back to the collector (2) and working medium being transported back into the evaporator (8) from the separating device (6) by way of supply lines, preferably with a level-controlled switching valve.

7. Method according to one of the preceding claims, **characterized in that** the heat energy that is fed into the collector (2) or the evaporator (8) originates at least partially from an energy source (1) comprising exhaust gas heast, waste heat from combustion processes, geothermal sources, solar collectors, heat pumps, fuel cells, waste heat from cooling processes, ambient heat from air or water, an internal combustion engine or a combined heat and power generating plant.

8. Method according to one of the preceding claims, **characterized in that** the propellant produced in the collector (2) is not only fed into the jet compressor (3) but additionally also expanded by means of an expansion device (12).

9. Method according to one of the preceding claims, **characterized in that** the expansion of the propellant operates an expansion device (12) such that the expanded propellant can be condensed directly in the heat exchange with the boiling working medium in the evaporator (8), and the condensate is transported back into the collector by a pump (18).

10. Method according to one of the preceding claims, **characterized in that** at least one expansion device (9, 12) for the conversion of heat energy into mechanical and/or electrical energy is connected to a generator (10, 13).

11. Method according to one of the preceding claims, **characterized in that** the propellant expanded in the expansion device (4) is fed to the mixture after the jet compressor (3).

12. Installation for the conversion of heat energy into mechanical, electrical and/or thermal energy according to one of Claims 1 to 11, comprising at least one evaporator unit (8), an expansion device (9) in connection therewith and at least one jet compressor (3), a first circuit in which a working medium is carried, a second circuit in which a propellant is carried, a common subsection, in which working medium and propellant are together carried and a separating device (6) in which working medium and propellant are separated and a collector (2) for heating the propellant, the heat energy of the mixture in the common subsection being used for the evaporation of working medium in the evaporator unit (8), at least one further expansion device (4, 20) being arranged in a partial stream of the second circuit of the propellant after the collector (2), in order to drive a pump (5, 18), which passes on working medium, propellant and/or mixture.

13. Installation according to Claim 12, comprising an evaporator unit (8) for evaporating the working medium and following that a low-pressure expansion device (9) for expanding the working medium arranged in the first circuit, a collector arranged in the second circuit for the heat energy absorption of the propellant and a separating device arranged in the common subsection for the separation of working medium and propellant.

14. Installation according to Claim 12 or 13, the first and second circuits being connected to the jet compressor (3) and the jet compressor (3) and the separating device (6) being connected by way of the common subsection and the separating device (6) being connected to a first and a second circuit.

15. Installation according to Claims 12 to 14, comprising at least two, preferably three, propellant partial streams, a first partial stream of the propellant preferably leading to an expansion device (12), a second partial stream of the propellant preferably leading into a jet compressor (3) and a third partial stream preferably leading into an expansion device (20).

16. Installation according to Claims 12 to 15, comprising:
a) an evaporator unit (8), in which a working medium can be evaporated,
b) an expansion device (9), which is optionally connected to a generator (10), the expansion device (9), preferably a low-pressure expansion device (9), being arranged downstream of the evaporator unit (8),
c) a jet compressor (3), which is arranged downstream of the expansion device (9), and in which the expanded vaporous working medium is compressed,
d) a collector (2) as a collector of the heat energy, by which propellant is brought to a higher temperature level,
e) a pump (5) and a separating device (6) with at least one valve (7), in which the mixture is separated into working medium and propellant,
f) an expansion device (4), preferably an expansion turbine (4), which drives the pump (5),
g) optionally a further low-pressure expansion device (12) with a coupled generator (13), which is arranged in the second circuit after the collector,
h) optionally a liquid feed pump for increasing the pressure when the jet compressor (3) is driven by a liquid.

17. Installation according to one of the preceding Claims 12 to 16, **characterized in that** the expansion device (9, 12) is connected to a generator (10, 13), which converts mechanical energy into electrical energy.

18. Installation according to one of the preceding Claims 12 to 17, which can be operated according to one of the preceding Claims 1 to 11.

## Revendications

1. Procédé pour la conversion d'énergie thermique en énergie mécanique, électrique et/ou thermique, le procédé présentant au moins deux circuits reliés par au moins une section partielle commune, le premier circuit présentant au moins un dispositif de détente (9), un fluide de travail étant guidé dans le premier circuit et un agent propulseur étant guidé dans le deuxième circuit et un mélange de fluide de travail et d'agent propulseur étant guidé dans la section partielle commune, le fluide de travail étant recyclé dans le premier circuit et alimenté dans une unité à évaporateur (8), la section partielle commune étant reliée au premier et au deuxième circuit via au moins un compresseur à jet (3), le mélange formé dans le compresseur à jet (3) étant séparé ensuite dans un dispositif de séparation (6) en flux de fluide de travail et flux d'agent propulseur, le fluide de travail évaporé étant introduit dans le dispositif de détente (9) et ensuite dans le compresseur à jet (3), **caractérisé en ce que** l'agent propulseur séparé est recyclé dans le deuxième circuit et introduit en vue de l'absorption d'énergie thermique dans un collecteur (2) et, après l'absorption d'énergie thermique, dans le compresseur à jet (3), au moins un autre dispositif de détente (4, 20) étant disposé dans un flux partiel du deuxième circuit de l'agent propulseur en aval du collecteur (2), pour entraîner une pompe (5, 18) qui achemine le fluide de travail, l'agent propulseur et/ou le mélange.

2. Procédé pour la conversion d'énergie thermique en énergie mécanique, électrique et/ou thermique selon la revendication 1, **caractérisé en ce que** le dispositif de détente (9) est un dispositif de détente basse pression, de préférence au moins un ventilateur à lobes de type Roots (9), une pompe à roue ovale et/ou un détendeur à vis, de préférence équipé d'une chambre d'aspiration étanche au gaz, un ventilateur à lobes de type Roots (9) étant particulièrement préféré.

3. Procédé pour la conversion d'énergie thermique en énergie mécanique, électrique et/ou thermique selon la revendication 1 ou 2, **caractérisés en ce que** la température et la pression du mélange d'agent propulseur et de vapeur de fluide de travail aspiré au moment de la transmission d'énergie thermique au fluide de travail par évaporation dans l'évaporateur (8) sont plus élevées que celles du fluide de travail à évaporer se trouvant dans l'évaporateur (8).

4. procédé pour la conversion d'énergie thermique en énergie mécanique, électrique et/ou thermique selon l'une quelconque des revendications précédentes, **caractérisé en ce que** l'agent propulseur condensé est recyclé au moins partiellement, en vue de l'évaporation, vers une source de chaleur externe.

5. Procédé pour la conversion d'énergie thermique en énergie mécanique, électrique et/ou thermique selon l'une quelconque des revendications précédentes, **caractérisé en ce que** lors de la transmission d'énergie thermique de l'agent propulseur sous forme de vapeur au fluide de travail se trouvant dans l'évaporateur (8), du fluide de travail condensé est recyclé dans un dispositif de séparation (6), le dispositif de séparation (6) présentant de préférence une régulation du niveau de liquide.

6. Procédé pour la conversion d'énergie thermique en énergie mécanique, électrique et/ou thermique selon l'une quelconque des revendications précédentes par détente d'un fluide de travail gazeux dans un dispositif de détente (9) relié à un évaporateur (8), **caractérisé en ce que**
- la détente est réalisée sous forme d'une détente basse pression,
- le fluide de travail détendu est comprimé à l'aide d'un compresseur à jet (3) disposé en aval du dispositif de détente (9),
- de l'agent propulseur réchauffé dans un collecteur (2) est introduit dans le compresseur à jet (3),
- le compresseur à jet est exploité de manière telle que la température finale du mélange atteinte après la compression est supérieure à la température d'évaporation du fluide de travail dans l'évaporateur (8) de façon telle que le mélange de fluide de travail et d'agent propulseur condense lors de l'échange thermique contre le fluide de travail liquide en ébullition dans l'évaporateur (8),
- le condensat est transporté à l'aide d'une pompe (5) dans un dispositif de séparation (6), la pompe (5) étant alimentée par un dispositif de détente (4) en agent propulseur du collecteur (2), et
- de l'agent propulseur est transporté en retour vers le collecteur (2) et du fluide de travail est transporté en retour dans l'évaporateur (8) venant du dispositif de séparation (6) via des conduites d'alimentation, de préférence à l'aide d'un actuateur à niveau commandé.

7. Procédé selon l'une quelconque des revendications précédentes, **caractérisé en ce que** l'énergie thermique qui est injectée dans le collecteur (2) ou l'évaporateur (8) provient au moins partiellement d'une source d'énergie (1) comprenant la chaleur d'effluents gazeux, la chaleur résiduaire de processus de combustion, les sources géothermiques, les capteurs solaires, les pompes à chaleur, les piles à combustible, la chaleur résiduaire de processus de refroidissement, les chaleurs ambiantes de l'air ou de l'eau, un moteur à combustion, une centrale de cogénération.

8. Procédé selon l'une quelconque des revendications précédentes, **caractérisé en ce que** l'agent propulseur généré dans le collecteur (2) est non seulement injecté dans le compresseur a jet (3) mais en outre détendu via un dispositif de détente (12) .

9. Procédé selon l'une quelconque des revendications précédentes, **caractérisé en ce que** la détente de l'agent propulseur fait fonctionner un dispositif de détente (12) de manière telle que l'agent propulseur détendu peut être condensé directement dans l'échange thermique avec le fluide de travail en ébullition dans l'évaporateur (8) et le condensat est transporté en retour dans le collecteur à l'aide d'une pompe (18).

10. Procédé selon l'une quelconque des revendications précédentes, **caractérisé en ce qu'**au moins un dispositif de détente (9, 12) est/sont relié(s) à un générateur (10, 13) pour la conversion d'énergie thermique en énergie mécanique et/ou électrique.

11. Procédé selon l'une quelconque des revendications précédentes, **caractérisé en ce que** l'agent propulseur détendu dans le dispositif de détente (4) est alimenté dans le mélange en aval du compresseur à jet (3).

12. Installation pour la conversion d'énergie thermique en énergie mécanique, électrique et/ou thermique selon l'une quelconque des revendications 1 à 11, comprenant au moins une unité à évaporateur (8), un dispositif de détente (9) relié à celle-ci et au moins un compresseur à jet (3), un premier circuit dans lequel est guidé un fluide de travail, un deuxième circuit dans lequel est guidé un agent propulseur, une section partielle commune, dans laquelle le fluide de travail et l'agent propulseur sont guidés ensemble et un dispositif de séparation (6) dans lequel le fluide de travail et l'agent propulseur sont séparés et un collecteur (2) pour réchauffer l'agent propulseur, l'énergie thermique du mélange étant utilisée dans la section partielle commune pour l'évaporation de fluide de travail dans l'unité à évaporateur (8), au moins un autre dispositif de détente (4, 20) étant disposé dans un flux partiel du deuxième circuit de l'agent propulseur, en aval du collecteur (2), pour entraîner une pompe (5, 18) qui achemine le fluide de travail, l'agent propulseur et/ou le mélange.

13. Installation selon la revendication 12, comprenant une unité à évaporateur (8) pour évaporer le fluide de travail et, ensuite, un dispositif de détente basse pression (9) pour la détente du fluide de travail, disposés dans le premier circuit, un collecteur disposé dans le deuxième circuit pour l'absorption d'énergie thermique de l'agent propulseur et un dispositif de séparation disposé dans une section partielle commune pour la séparation du fluide de travail et de l'agent propulseur.

14. Installation selon la revendication 12 ou 13, le premier et le deuxième circuit étant reliés au compresseur a jet (3) et le compresseur à jet (3) et le dispositif de séparation (6) étant reliés via la section partielle commune et le dispositif de séparation (6) étant relié à un premier et à un deuxième circuit.

15. Installation selon les revendications 12 à 14, comprenant au moins deux, de préférence trois flux partiels d'agent propulseur, un premier flux partiel conduisant de préférence d'agent propulseur vers un dispositif de détente (12), un deuxième flux partiel conduisant de préférence d'agent propulseur dans un compresseur à jet (3) et un troisième flux partiel conduisant de préférence dans un dispositif de détente (20).

16. Installation selon les revendications 12 à 15, comprenant :
a) une unité à évaporateur (8), dans laquelle un fluide de travail peut être évaporé,
b) un dispositif de détente (9), qui est éventuellement relié à un générateur (10), le dispositif de détente (9), de préférence un dispositif de détente basse pression (9), étant disposé en aval de l'unité à évaporateur (8),
c) un compresseur à jet (3), qui est disposé en aval du dispositif de détente (9) et dans lequel le fluide de travail sous forme vapeur, détendu, est compressé,
d) un collecteur (2) comme récupérateur de l'énergie thermique, par lequel le fluide de travail est amené à un niveau de température supérieur,
e) une pompe (5) et un dispositif de séparation (6) présentant au moins une soupape (7), dans lequel le mélange est séparé en fluide de travail et agent propulseur,
f) un dispositif de détente (4), de préférence une turbine de détente (4), qui entraîne la pompe (5),
g) le cas échéant un autre dispositif de détente basse pression (12) doté d'un générateur couplé (13), qui est disposé dans le deuxième circuit en aval du collecteur,
h) le cas échéant une pompe de transport de liquide pour augmenter la pression, lorsque le compresseur à jet (3) est entraîné par un liquide.

17. Installation selon l'une quelconque des revendications précédentes 12 à 16, **caractérisée en ce que** le dispositif de détente (9, 12) est relié à un générateur (10, 13), qui convertit l'énergie mécanique en énergie électrique.

18. Installation selon l'une quelconque des revendications précédentes 12 à 17 qui peut être exploitée selon l'une quelconque des revendications susmentionnées 1 à 11.
